# EUROPEAN PATENT APPLICATION

(11) **EP 3 289 872 A1**
(43) Date of publication of application: **07.03.2018**
(21) Application number: 16382410.5
(22) Date of filing: 01.09.2016
(51) Int. Cl.: A01N 1/00, A23L 3/3508

(54) **COMPOSITION FOR THE PRESERVATION OF CORPSES OR PARTS THEREOF**

(71) Applicant: Bioseol Grupo de Investigacion, S.L., 28041 Madrid (ES)
(72) Inventor: ANTÍA MONTOYA, Germán, 050034 Medellín, Antioquia (CO); BALFAGON VILAGRASA, Jordi, E- 28840 Mejorada del Campo, Madrid (ES)
(74) Representative: ABG Patentes, S.L.

(57) **Abstract**

The present invention relates to a biocidal composition for the preservation of human or animal corpses or parts thereof that may be used in the field of embalming products as well as for long-term preservation. This non-toxic composition can substitute the hazardous embalming products that are currently on the market such as those based on formaldehyde or bronopol. Said composition comprises at least: (i) a biocide, which is selected from an acid having a molecular weight lower or equal to 200 g/mol; (ii) a pH buffer suitable for providing a pH in the range of 4 to 7 to the composition; and (iii) an osmotic corrector.

## Description

### FIELD OF THE INVENTION

The present invention relates to a biocidal composition for the preservation of human or animal corpses or parts thereof that may be used in the field of embalming products as well as for long-term preservation.

### BACKGROUND OF THE INVENTION

Upon death, a body immediately begins decomposing, sometimes at a very rapid pace depending on the environment to which the body is exposed. By the time of a burial or cremation, which may be several days after death, decomposition may be well under way, which may materially alter the appearance of the body. Therefore, it is common to preserve a dead body via an embalming process which slows down decomposition.

Since the time of Neanderthals death has been accompanied of rituals and later burials. Different ancient cultures already developed techniques to preserve remains from the natural decay and decomposition. In Spain (Osorno) bones were found (about 5000 years aged) covered in cinnabar for preservation. Egyptians and other elder cultures developed advanced embalming procedures. In the Middle Ages and the Renaissance the developments in medicine required techniques to preserve the bodies to be studied for anatomic purposes. Thus, several procedures were developed and described by the scientists of that period. William Harvey, in the 17^{th} century, was the first to detail the procedure to embalm corpses using preservative liquids through the circulation network. However William Hunter was the first to apply it to embalm corpses in the 18^{th} century. Alcohols, heavy metals and specially arsenic were used for that purpose. Legal concerns about the use and handling of these products, that polluted the soil and damaged the operators promoted investigations to find out other embalming liquids.

In 1867, August Wilheim discovered formaldehyde and its embalming properties, and since then this compound remains the base for embalming modern methods. Although nowadays embalmers use products mainly based on it, formaldehyde is very toxic, and the WHO (World Health Organization) declared it as a carcinogen product in 2005, in the group 1B, encouraging the governmental and intergovernmental authorities to adopt measures to limit and restrict its use.

The decision of the WHO to limit the use of formaldehyde is promoting investigations to find alternative products. Presently, bronopol (2-bromo-2-nitropropane-1,3-diol (C₃H₆BrNO₄)) is the most accepted among formaldehyde's alternatives (see for instance WO 09122056 A1, WO 11033221 A2). Bronopol is also authorized by the ECHA (European Chemicals Agency) in the TP22 group of biocides to be used in embalming and taxidermist fluids. Nevertheless, although not as harmful as formaldehyde, it is also considered as a toxic product by ingestion and to the environment, as it can be seen in the MSDS of the product.

The need thus remains for available compositions which are nontoxic to the embalmer and which make it possible to efficiently preserve cadavers or parts thereof.

### SUMMARY OF THE INVENTION

The present invention solves the aforementioned need by the provision of a composition that is suitable for the preservation of human or animal corpses or parts thereof, without requiring the use of toxic raw materials. The composition of the invention may be used for embalming procedures as well as for long-term preservation of cadavers or parts thereof (for instance, when later studies are required).

The composition of the invention, in essence, is based on the mixture of three components: (i) a biocide, (ii) a pH buffer, and (iii) an osmotic corrector. Particularly, in one aspect, the present invention is directed to a composition suitable for the preservation of corpses or parts thereof, said composition comprising:
(i) a biocide, which is selected from an acid having a molecular weight lower or equal to 200 g/mol;
(ii) a pH buffer suitable for providing a pH in the range of 4 to 7; and
(iii) an osmotic corrector.

Additionally, the presence of (iv) a solvent is required in order to obtain a liquid composition intended for final use (referred to herein as "diluted liquid composition"). All the solvent may form part of the composition to be commercialized, e.g. in a solution ready for use. Alternatively, the compositions may be in dry form (with no solvent), or be slurries or concentrated liquid compositions packaged for transport, which are then diluted as convenient before use.

In another aspect, the present invention is directed to the use of a composition as defined above for the preservation of corpses or parts thereof.

In another aspect, the present invention is directed to a method for the preservation of corpses or parts thereof, said method being selected from one of the following:
- a method comprising injecting a composition as defined above into the corpse by arterial route;
- a method comprising injecting a composition as defined above into the corpse by the intra-muscular route; or
- a method comprising dipping the corpse or a part thereof in a composition as defined above.

### DETAILED DESCRIPTION OF THE INVENTION

This invention provides a nontoxic alternative for the substitution of the hazardous embalming products that are currently on the market such as those based on formaldehyde or bronopol. The composition of the invention also solves the problem of the rigidness provoked by other preservers, maintaining the cellular flexibility and structure. The absence of annoying odor, restoration of the natural color and avoiding the perspiration suffered by the embalmed corpses with formaldehyde are additional advantages of this invention that help to get rid of the death look of corpses.

Preferably, the solvent of the composition is water or a mixture of solvents comprising mostly water, thus avoiding the need or minimizing the use of alcohols.

More specifically, some of the features and advantages that characterize the composition of the invention are the following:
- Non-Toxic essential components.
- Alcohol free, if required.
- Maintains cellular flexibility and structure.
- Same procedure of application as current embalming liquids.
- Flows easily through the circulation network.
- Non-offensive odors.
- Prevents "Rigor Mortis".
- Prevents perspiration of the deceased body.
- Preserves the forensic evidences without damaging human tissues.
- Hydrates the body tissues.
- Recovers the original color of the body.

Thus, according to a particular embodiment, the composition of the invention is used to carry out embalming procedures.

The term "embalming" refers to procedures and products for the preservation and presentation of the body of a deceased person (or any other animal).

Alternatively, the composition of the invention may be used for the preservation of corpses or parts thereof such as organs or tissues for long term, for instance for later studies. As noted above, the preservation of forensic evidence is another advantage of this invention against the formulas based on formaldehyde. According to a particular embodiment, the composition is used for the preservation of human bodies or anatomical parts, in particular for the preservation of bodies or anatomical parts for dissection.

Within the meaning of the invention, the term "to preserve" or the like is understood to primarily mean the fact that the enzymatic action is halted or slowed down in human or animal tissue, in comparison with untreated tissue, which prevents or slows down the autocatalytic decomposition of this tissue, and/or that the tissues exhibit better resistance to external or internal attacks of bacteria and mycetae than untreated tissues.

The percentages by weight are expressed in relation to the total weight of the composition according to the invention, either in dry form or in diluted form suitable for final use.

To provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

In its dry form, the composition of the invention comprises at least the following components: (i) a biocide, (ii) a pH buffer, and (iii) an osmotic corrector, as previously defined. Additionally, (iv) a solvent is added to provide either slurries or concentrated liquid compositions as well as the final diluted liquid compositions.

The biocide is selected from an acid having a molecular weight lower or equal to 200 g/mol or a mixture of such acids. In a particular embodiment, the biocide is a carboxylic or a hydroxycarboxylic acid having from 2 to 4 carbon atoms or boric acid. Particular examples of biocides that may be used include, but are not limited to, acetic acid, glycolic acid (2-hydroxyethanoic acid), hydracrylic acid (3-hydroxypropanoic acid), lactic acid (2-hydroxypropanoic acid), 2-hydroxybutanoic acid, 3-hydroxybutanoic acid, 4-hydroxybutanoic acid, 2,3-dihydroxybutanoic acid, 2,4-dihydroxybutanoic acid, 3,4-dihydroxibutanoic acid, malic acid (hydroxybutanedioic acid), tartaric acid (2,3-dihydroxybutanedioic acid) and boric acid. Preferred biocides in the context of the invention are lactic acid, acetic acid and tartaric acid.

Typically, for its final use, the biocide is present in an amount ranging from 0.5 to 20% by weight with respect to the total weight of the diluted liquid composition. In a particular embodiment, the composition comprises from 1 to 15%, preferably from 5 to 12%, and more preferably about 10%, by weight of a biocide, in the final use.

In the dry form, the percentage of the biocide in the composition normally ranges from 10 to 50%, preferably from 20 to 45%, and more preferably from 30 to 40% by weight. In particularly preferred embodiments, the percentage of the biocide in a dry composition is about 33.3% or about 37% by weight.

The biocide is responsible for slowing down the degradation process after death, preserving the tissues against bacteria, mold and others.

The pH buffer is added to the composition to provide a pH in the range of 4 to 7. In a particular embodiment, the pH buffer is a salt of an acid having a molecular weight lower or equal to 200 g/mol or a mixture of such salts. More particularly, the pH buffer is selected from a salt of a carboxylic or a hydroxycarboxylic acid having from 2 to 4 carbon atoms or a salt of boric acid. Particular examples of pH buffers that may be used include, but are not limited to, a salt of an acid selected from acetic acid, glycolic acid, hydracrylic acid, lactic acid, 2-hydroxybutanoic acid, 3-hydroxybutanoic acid, 4-hydroxybutanoic acid, 2,3-dihydroxybutanoic acid, 2,4-dihydroxybutanoic acid, 3,4-dihydroxibutanoic acid, malic acid, tartaric acid and boric acid. In a more particular embodiment, such salt is the sodium salt. Preferred pH buffers in the context of the invention are sodium diacetate, sodium lactate, sodium tartrate and sodium tetraborate.

Typically, for its final use, the pH buffer is present in an amount ranging from 0.5 to 20% by weight with respect to the total weight of the diluted liquid composition. In a particular embodiment, the composition comprises from 1 to 15%, preferably from 5 to 15%, for instance about 10% or 15%, by weight of a pH buffer, in the final use.

In the dry form, the percentage of the pH buffer in the composition normally ranges from 10 to 60%, preferably from 20 to 55%, and more preferably from 30 to 50% by weight. In particularly preferred embodiments, the percentage of the pH buffer in a dry composition is about 33.3% or about 50% by weight.

It is a fact that during the process of decomposition the pH of lixiviates and liquids that leave the body goes down. This is because of the acidic environment developed by bacteria. The presence of this buffer slows down this effect. Therefore, the use of this buffer is required to maintain an adequate environment of pH in the body. Thus, the bacteria that provoke decomposition cannot develop themselves properly. Because of all this, the pH buffer by itself has a synergic effect to the preservation. The use of the pH buffer also contributes to get a non-caustic preserver solution that allows handling without any risk for the operators.

The composition of the invention also comprises an osmotic corrector, which in a particular embodiment is selected from sodium chloride and potassium chloride. Typically, the osmotic corrector is present in an amount ranging from 0.5 to 20% by weight with respect to the total weight of the diluted liquid composition. In a particular embodiment, the composition comprises from 1 to 15%, preferably from 5 to 12%, for instance about 5% or 10%, by weight of an osmotic corrector, in the final use.

In the dry form, the percentage of the osmotic corrector in the composition normally ranges from 10 to 50%, preferably from 10 to 40%. In particularly preferred embodiments, the percentage of the osmotic corrector in a dry composition is about 16.7%, 31.7% or 33.3% by weight.

The addition of this corrector is believed to be critical to get two effects: a) allow the preserver to pass into the cells through the membrane and b) avoid an excess of water into the cells that would cause liquefaction.

The composition of the invention may also comprise optional components such as colorings or additional biocides, among others.

The presence of colorings is intended for embalming corpses. Thus, the color of this preserver is like the color of human or animal blood, so that after embalming, the body remains with a natural color. The composition of this invention has the capability to return to the natural color, even in bodies with clear symptoms of decay with an extended greenly color over the body, reducing dramatically the green stain that appears around the genital area, after few hours of the death. This is an additional advantage over the actual preservers: maintaining the color the body had in the beginning of the embalming process. Said coloring must be stable in acid media. Examples of suitable colorings include, but are not limited to, Ponceau 4R (E124), cochineal red (E122), red aniline, red dye 40, mordant red 3, mordant red 11, acid red 1 and acid red 2. If present, typically the amount of the coloring ranges from 0.1 to 2% by weight with respect to the total weight of the diluted liquid composition.

The presence of additional biocides is not always required. However, for long-term preservation of tissues, it is advisable to add a small amount of a fungicide. For instance, said fungicide may be selected from iodine, tea tree oil, cinnamaldehyde, citronella oil, jojoba oil, nimbin, oregano oil, rosemary oil, quaternary ammonium compounds, sodium nitrite or monocerin. Preferred additional biocides in the context of the invention are quaternary ammonium compounds and sodium nitrite. If present, typically the amount of the additional biocide ranges from 0.1 to 4% by weight, more preferably from 0.5 to 2% by weight with respect to the total weight of the diluted liquid composition.

As noted previously, the above-mentioned compositions are either dry compositions or slurries or concentrated liquids packaged for transport, which are then diluted before use (e.g. before injection), or diluted liquid compositions ready for use (e.g. ready for injection).

The compositions of the invention may be conveniently prepared in water as the sole solvent. Alternatively, a mixture of solvents may be used wherein water is the main solvent such as a mixture of water and alcohol. The solvent typically represents from 50 to 80% of the weight in the final diluted liquid composition.

In a particular embodiment, the composition of the invention is a liquid composition comprising 0.5 to 20% component (i), 0.5 to 20% component (ii), 0.5 to 20% component (iii), and a solvent (iv) which is selected from water or a mixture of solvents comprising water.

In additional preferred embodiments, the preferences and particular embodiments described above are combined. The present invention is also directed to such combinations.

The above-mentioned composition may therefore be used for embalming procedures, for the preservation of bodies with a view to their dissection and for the preservation of human and animal anatomical parts. Typical common procedures known in the state of the art may be used for these purposes. For instance, the composition of the invention may be injected into the corpse by arterial route, by the intra-muscular route, or the corpse or a part thereof may be dipped in the composition.

The invention is described in detail below by means of the following examples, which are to be construed as merely illustrative and not limitative of the scope of the invention.

### EXAMPLES

Tests have been done in the department of "Medicina Legal" of Medellin in Colombia; the Morgue of the "Tecnologico de Antioquia" and in several Mortuaries in Colombia, where several corpses have been embalmed using traditional methods, substituting preservers based on formaldehyde by compositions according to this invention. In all cases, the results have been the same: corpses have been preserved for several days, without the use of any other technique, at temperatures between 22 - 28 °C. The following advantageous effects have been observed: hydration of the tissues; maintenance of the elasticity of the skin; capacity for body joint movement; disappearance of the odor of the decayed bodies; restoration of the natural color and disappearance or minimization of the green blur, typical when decay of the bodies begins; odor from the embalming liquid very weak. Even in the bodies where decomposition was advanced, the natural and lifelike appearance was restored.

Dipping tests were also made for organs in the compositions according to this invention. The organs maintained appearance, texture and color for several months. Histological tests made by microscopic methods demonstrate that tissues remain without alterations.

Some of the tested compositions are the following (composition 1 corresponds to a dry composition and compositions 2 to 5 are diluted liquid compositions, ready for use):

| Composition 1 | |
|---|---|
| Tartaric Acid | 33.3% |
| Sodium Diacetate | 33.3% |
| Sodium Chloride | 33.3% |

| Composition 2 | |
|---|---|
| Lactic Acid | 10% |
| Sodium Diacetate | 10% |
| Sodium Chloride | 10% |
| Water | 70% |

| Composition 3 | |
|---|---|
| Lactic Acid | 10% |
| Sodium Diacetate | 10% |
| Sodium Chloride | 5% |
| Sodium Tetraborate | 5% |
| Water | 70% |

| Composition 4 | |
|---|---|
| Lactic Acid | 10% |
| Sodium Diacetate | 10% |
| Sodium Chloride | 5% |
| Sodium Nitrite | 2% |
| Water | 73% |

| Composition 5 | |
|---|---|
| Lactic Acid | 10% |
| Sodium Diacetate | 10% |
| Sodium Chloride | 9.5% |
| Iodine | 0.5% |
| Water | 70% |

## Claims

1. A composition suitable for the preservation of corpses or parts thereof, said composition comprising:
(i) a biocide, which is selected from an acid having a molecular weight lower or equal to 200 g/mol;
(ii) a pH buffer suitable for providing a pH in the range of 4 to 7; and
(iii)an osmotic corrector.

2. Composition according to claim 1, which further comprises a solvent, preferably an aqueous solvent.

3. Composition according to any one of the preceding claims, wherein component
(i) is a carboxylic or a hydroxycarboxylic acid having from 2 to 4 carbon atoms or boric acid.

4. Composition according to any one of the preceding claims, wherein component
(i) is selected from the group consisting of acetic acid, glycolic acid, hydracrylic acid, lactic acid, 2-hydroxybutanoic acid, 3-hydroxybutanoic acid, 4-hydroxybutanoic acid, 2,3-dihydroxybutanoic acid, 2,4-dihydroxybutanoic acid, 3,4-dihydroxibutanoic acid, malic acid, tartaric acid and boric acid.

5. Composition according to any one of the preceding claims, wherein component
(ii) is a salt of an acid having a molecular weight lower or equal to 200 g/mol.

6. Composition according to any one of the preceding claims, wherein component
(ii) is a salt of a carboxylic or hydroxycarboxylic acid having from 2 to 4 carbon atoms or a salt of boric acid.

7. Composition according to any one of the preceding claims, wherein component
(ii) is a salt of an acid selected from acetic acid, glycolic acid, hydracrylic acid, lactic acid, 2-hydroxybutanoic acid, 3-hydroxybutanoic acid, 4-hydroxybutanoic acid, 2,3-dihydroxybutanoic acid, 2,4-dihydroxybutanoic acid, 3,4-dihydroxibutanoic acid, malic acid, tartaric acid and boric acid.

8. Composition according to any one of the preceding claims, wherein component (iii) is selected from sodium chloride and potassium chloride.

9. Composition according to any one of the preceding claims, wherein said composition is a liquid composition comprising 0.5 to 20% component (i), 0.5 to 20% component (ii), 0.5 to 20% component (iii), and a solvent (iv) which is selected from water or a mixture of solvents comprising water.

10. Composition according to any one of the preceding claims, which further comprises a coloring and/or an additional biocide.

11. Composition according to claim 10, wherein the coloring is a dye stable in acid media, selected from Ponceau 4R (E124), cochineal red (E122), red aniline, red dye 40, mordant red 3, mordant red 11, acid red 1 and acid red 2.

12. Composition according to claim 10, wherein the additional biocide is a fungicide selected from iodine, tea tree oil, cinnamaldehyde, citronella oil, jojoba oil, nimbin, oregano oil, rosemary oil, a quaternary ammonium compound and monocerin.

13. Use of a composition as defined in any one of the preceding claims for the preservation of corpses or parts thereof.

14. Use according to claim 13, wherein the composition is intended for embalming procedures or for long-term preservation of corpses or parts thereof for later studies.

15. Method for the preservation of corpses or parts thereof, said method being selected from one of the following:
- a method comprising injecting a composition as defined in any one of claims 1 to 12 into the corpse by arterial route;
- a method comprising injecting a composition as defined in any one of claims 1 to 12 into the corpse by the intra-muscular route; or
- a method comprising dipping the corpse or a part thereof in a composition as defined in any one of claims 1 to 12.
